# EUROPEAN PATENT SPECIFICATION

(11) **EP 0 834 234 B1**
(45) Date of publication and mention of the grant of the patent: **21.04.1999**
(21) Application number: 96917300.4
(22) Date of filing: 20.06.1996
(51) Int. Cl.: H04N 13/00, G09F 19/12

(54) **A METHOD FOR CAPTURING AND EDITING PICTURES SO AS TO OBTAIN A VIRTUAL DEPTH EFFECT**
VERFAHREN ZUM AUFNEHMEN UND SCHNEIDEN VON BILDERN ZUR ERZEUGUNG EINES VIRTUELLEN TIEFENEFFEKTS
PROCEDE POUR PRENDRE ET PROJETER DES IMAGES DE MANIERE A OBTENIR UN EFFET DE RELIEF

(30) Priority: 21.06.1995 BR 9502258
(43) Date of publication of application: 08.04.1998
(73) Proprietor: Araujo De Sousa, Mauricio, 05065-001 Sao Paulo, SP (BR)
(72) Inventor: Araujo De Sousa, Mauricio, 05065-001 Sao Paulo, SP (BR)
(74) Representative: Nettleton, John Victor
(86) International application number: BR9600025
(87) International publication number: WO9701249

(56) References cited:
- US-A- 4 625 290
- PATENT ABSTRACTS OF JAPAN vol. 7, no. 264 (E-212) [1409] , 24 November 1983 & JP,A,58 145291 (HITACHI SEISAKUSHO), 30 August 1983,

## Description

### FIELD OF THE INVENTION

The present invention refers to a specific method, especially developed for use by persons dealing with the production of either video or movies, for the purpose of providing the production of pictures to be viewed with obtention of a virtual depth effect.

### BACKGROUND OF THE INVENTION

The systems of capturing and editing pictures developed and used so far are systems which capture a picture through a lens, said picture being then edited in a direct way, that is to say, without any treatment other than the tratitional retouches and/or insertion and/or cuts of picture and sound (if any) details captured by the equipment.

These systems, however, are only useful for capturing simple pictures of objects and people, which can be viewed only on a two-dimentional plane.

The inventor of the present invention has developed and filed a patent application for a method of producing drawings for a virtual depth effect, through which people can view drawings made on a sheet of paper or any other two-dimensional plane as if such drawings were on a three-dimentional plane, that is to say, a person sees the drawings in three dimentions (3D). The method of creating these drawings follows a series of given specific characteristics developed by the inventor.

On the basis of this knowledge, one has thought in transferring said method to the scope of capturing, editing and projecting pictures, by using the same means currently available in this area.

After numberless attempts in vain, one has come to the conclusion that, in this case, it was not a mere transposition from the drawing technique to the technique of capturing and editing pictures, in order to obtain the virtual depth effect. Just editing two pictures side-by-side was not enough.

In this case, however, a further skillful making was necessary to produce pictures to be viewed with the obtention of the virtual depth effect.

### OBJECTIVES AND DESCRIPTION OF THE INVENTION

The objective of the present invention as defined in the claims is therefore to provide a method which can be effectively used for capturing, editing and projecting pictures to be viewed with a virtual depth effect.

This objective is achieved through the following methodological sequence of capturing and editing pictures:
a) capturing either objects or persons simultaneously by using two identical cameras disposed upon the same base, with a distance of about 20cm between the centers of their lens;
b) editing the two pictures captured by the two cameras on the same monitor or television screen in an inverted manner, that is to say, the picture captured by the right-side camera should appear on the left side of the screen, and the picture captured by the left-side camera should appear on the right side of the screen, both pictures being a little spaced apart from each other.

While capturing the pictures, the objects or persons may be either standing still or in motion.

The virtual depth effect (3D) is then obtained, after the pictures are edited on the screen, through a little adjustment of focus (i.e. "a little squinting") by the viewer.

The observation of the pictures captured and edited in accordance with the method of the present invention can be carried out by any person, without the need of eyeglasses or other auxiliary devices. Even people using correcting lenses (either eyeglesses or contact lenses) can have the feeling of three-dimensionality of the projected pictures with a very good viewing of the pictures, without having to take off their correcting lenses.

## Claims

1. A method for capturing and editing pictures so as to obtain a virtual depth effect, characterized in that it comprises:
a) capturing objects or persons simultaneously, by using two identical cameras, disposed on the same base and spaced apart from each other by approximately 20 cm;
b) editing the two pictures captured by the two cameras on the same monitor or television screen in an inverted manner, the picture captured by the right-side camera appearing on the left side of the screen, and the picture captured by the left-side camera appearing on the right side of the screen, both pictures being a little spaced-apart from each other; and
c) making a little adjustment of focus on the part of the viewer.

2. A method in accordance with claim 1, characterized in that the objects or persons captured by the cameras are either standing still or in motion.

## Patentansprüche

1. Verfahren zum Aufnehmen und Zeigen von Bildern, um ein Tiefensicht-Effekt zu erhalten, dadurch gekennzeichnet, dass es aus folgenden Schritten besteht:
a) Gegenstände und Personen gleichzeitig durch zwei identische Kameras aufnehmen, die auf derselben Basis im Abstand von 20 cm voneinander angeordnet sind;
b) die beiden von den zwei Kameras aufnehmen Bilder auf demselben Monitor bzw. Fernsehschirm umgekehrt zeigen, wobei das von der Kamera der rechten Seite aufgenommene Bild auf der linken Seite des Schirms erscheint, und das von der Kamera der linken Seite aufgenommene Bild auf der rechten Seite des Schirms, und wobei beide Bilder mit geringem Abstand voneinander stehen; und
c) eine geringe Einstellung durchführen seitens des Zuschauers.

2. Verfahren nach Anspruch 1, dadurch gekennzeichnet, dass die von den Kameras aufgenommenen Gegenstände und Personen entweder stehen oder in Bewegung sind.

## Revendications

1. Une méthode pour capturer et éditer des images de manière a obtenir un effet visuel de profondeur, caractérisée en ce qu'elle comprend:
a) capturer des objets ou des personnes simultanément, en utilisant deux caméras identiques disposées sur la même base et écartées l'une de l'autre par environ 20 cm;
b) éditer les deux images capturées par les deux caméras sur le même moniteur ou écrans de télévision de façon inverse, l'image capturée par la caméra de la droite apparaissant du coté gauche de l'écran, et l'image capturée par la caméra de la gauche apparaissant du coté droit de l'écran, les deux images étant un peu écartées l'une de l'autre; et
c) faire un petit réglage de la par du téléspectateur.

2. Une méthode selon la revendication 1, caractérisée en ce que les objets et les personnes capturées par les caméras sont immobiles ou en mouvement.
